# EUROPEAN PATENT SPECIFICATION

(11) **EP 2 799 401 B1**
(45) Date of publication and mention of the grant of the patent: **06.09.2017**
(21) Application number: 12862307.1
(22) Date of filing: 28.12.2012
(51) Int. Cl.: C02F 1/36, C02F 1/467, C02F 101/30, C02F 1/72

(54) **METHOD OF OPERATING A PURIFYING DEVICE**
VERFAHREN ZUM BETRIEB EINER REINIGUNGSVORRICHTUNG
PROCÉDÉ D'UTILISATION D'UN DISPOSITIF DE PURIFICATION

(30) Priority: 29.12.2011 JP 2011290235
(43) Date of publication of application: 05.11.2014
(73) Proprietor: Daikin Industries, Ltd., Osaka 530-8323 (JP)
(72) Inventor: NISHIMURA, Masaya, Osaka-shi Osaka 530-8323, Japan (JP); KAGAWA, Kenkichi, Osaka-shi Osaka 530-8323, Japan (JP)
(74) Representative: Goddar, Heinz J.
(86) International application number: PCT/JP2012/008457
(87) International publication number: WO 2013/099292

(56) References cited:
- WO-A1-02/085793
- WO-A1-02/098799
- WO-A1-2008/150541
- AU-A1- 2010 248 679
- CN-A- 102 689 939
- JP-A- H11 104 655
- JP-A- 2000 237 755
- JP-A- 2001 293 478
- JP-A- 2011 092 920
- JP-A- 2012 164 556
- US-A1- 2003 164 308
- US-B1- 6 491 797
- US-B1- 6 547 951

## Description

### TECHNICAL FIELD

The present invention relates to a method of operating liquid purifying devices that purify liquid in a storage tank.

### BACKGROUND ART

Conventionally, a liquid purification technique of purifying liquid by removing impurities therefrom is widely known in the art. As an example of this liquid purification technique, Patent Document 1 discloses a liquid treatment device including a discharge unit that causes electric discharge to purify liquid.

In the liquid treatment device of Patent Document 1, a high voltage is applied from a direct current (DC) power supply to a pair of electrodes so as to cause electric discharge between the pair of electrodes placed in the liquid. This electric discharge produces active species such as hydroxyl radicals (OH radicals) in the liquid. These active species can decompose a nitrogen-based compound, an organic compound, etc. in the liquid, and can sterilize or disinfect the liquid. Moreover, Patent Document 2 discloses a method and apparatus for the disinfection of water and wastewater contaminated with bacteria and other microorganisms. The apparatus includes an electrolytic flow cell including electrodes forming a part of flow pipe or open channel through which water or wastewater passes. The electrodes are formed of iron, stainless steel, carbon or copper and connected to a power supply voltage in the range of 20 to 100 volts and establishing a current in the range of 1 to 6 amperes. Disinfection results from either metal ions impacting microbial cells or through the generation of hydrogen peroxide, hydroxyl radicals and hypochlorous acid. When the electrodes are copper, toxic metal contamination limits are established through proper design of the flow cell. An ultrasonic transducer is connected to the electrodes and enhances hydroxyl radical generation. Additional art can be found in Patent Documents 3 to 5.

### CITATION LIST

### PATENT DOCUMENT

PATENT DOCUMENT 1: Japanese Unexamined Patent Publication No. 2011-92920
PATENT DOCUMENT 2: US 2003/164308 A1
PATENT DOCUMENT 3: WO 02/085793 A1
PATENT DOCUMENT 4: WO 2008/150541 A1
PATENT DOCUMENT 5: US 6 547 951 B1

### SUMMARY OF THE INVENTION

### TECHNICAL PROBLEM

The conventional liquid treatment device produces hydroxyl radicals by electric discharge. However, it is difficult to achieve a desired purification effect due to the short life of hydroxyl radicals.

The present invention was developed in view of the above problem, and it is an object of the present invention to provide a method of operating a purifying device capable of effectively purifying liquid.

### SOLUTION TO THE PROBLEM

The invention proposes a method of operating a purifying device according to claim 1. Described, but not part of the invention, is a purifying device including a storage tank (41) configured to store liquid, a power supply (70, 70a, 70b, 70c), a pair of electrodes (64, 64a, 64b, 65, 65a, 65b) connected to the power supply (70, 70a, 70b, 70c), and an ultrasound generating section (94). The method of the invention comprises: causing electric discharge in the liquid in the storage tank (41) to produce hydroxyl radicals in the liquid in the storage tank (41); applying ultrasonic waves to the liquid in the storage tank (41) to convert hydrogen peroxide in the liquid, which is produced from the produced hydroxyl radicals, into hydroxyl radicals; and controlling a concentration of the hydrogen peroxide in the liquid in the storage tank (41) to be within a fixed range.

In the invention, the liquid is effectively purified by combining liquid purification that is performed by electric discharge and liquid purification that is performed by decomposing hydrogen peroxide produced by the electric discharge into hydroxyl radicals by ultrasonic waves.

According to the invention, the purifying device used in the method further includes: a first control section (1) controlling voltage application to the pair of electrodes (64, 64a, 64b, 65, 65a, 65b); and a second control section (5) controlling operation of the ultrasound generating section (94), wherein the first control section (1) and the second control section (5) control the voltage application to the pair of electrodes (64, 64a, 64b, 65, 65a, 65b) and the operation of the ultrasound generating section (94), respectively, so that the hydrogen peroxide concentration in the liquid in the storage tank (41) does not become higher than a predetermined upper limit. The hydrogen peroxide concentration in the liquid that is supplied from the purifying device to the outside is kept equal to or lower than the upper limit. This facilitates the treatment for removing hydrogen peroxide. The purifying device used in the method of the invention further includes: a sensor (7) detecting the hydrogen peroxide concentration in the liquid in the storage tank (41), wherein the first control section (1) controls the voltage application to the pair of electrodes (64, 64a, 64b, 65, 65a, 65b) based on a detection signal of the sensor (7), and the second control section (5) controls the operation of the ultrasound generating section (94) based on the detection signal of the sensor (7). At least when the hydrogen peroxide concentration in the liquid becomes higher than the upper limit, the first control section (1) stops the voltage application to the pair of electrodes (64, 64a, 64b, 65, 65a, 65b) to stop the electric discharge, and the second control section (5) drives the ultrasound generating section (94). The second control section (5) drives the ultrasound generating section (94) during a period in which the hydrogen peroxide concentration in the liquid in the storage tank (41) is higher than a predetermined lower limit. The ultrasound generating section (94) is driven when the hydrogen peroxide concentration in the liquid is equal to or higher than the lower limit. Accordingly, hydroxyl radicals are efficiently and continuously produced from hydrogen peroxide in the liquid. The purifying device further includes: a control section controlling voltage application to the pair of electrodes (64, 64a, 64b, 65, 65a, 65b) and operation of the ultrasound generating section (94), wherein the control section controls the voltage application to the pair of electrodes (64, 64a, 64b, 65, 65a, 65b) and the operation of the ultrasound generating section (94) so that the hydrogen peroxide concentration in the liquid in the storage tank (41) does not become higher than a predetermined upper limit. When the hydrogen peroxide concentration in the liquid in the storage tank (41) becomes higher than the predetermined upper limit, the control section stops the voltage application to the pair of electrodes (64, 64a, 64b, 65, 65a, 65b) to stop the electric discharge, and drives the ultrasound generating section (94) during a period in which the hydrogen peroxide concentration in the liquid is higher than a predetermined lower limit. The device used in the method may further include: a discharge portion (119) discharging bubbles into the liquid in the storage tank (41), and a supply portion (99) supplying a gas into the discharge portion (119), wherein the pair of electrodes (64, 65) are formed in a shape of a plate and are arranged so as to face each other, the power supply (70b) applies a pulse voltage to the pair of electrodes (64, 65), and the discharge portion (119) is placed on a bottom portion of the storage tank (41) between the pair of electrodes (64, 65). The liquid is tap water. Hydroxyl radicals are produced in the tap water by electric discharge of the pair of electrodes (64, 64a, 64b, 65, 65a, 65b), and hydroxyl radicals are produced by ultrasonic waves of the ultrasound generating section (94). The tap water contains chlorine dissolved therein. Chlorine in the tap water allows hydroxyl radicals to be efficiently produced by electric discharge of the pair of electrodes (64, 64a, 64b, 65, 65a, 65b).

### ADVANTAGES OF THE INVENTION

According to the present invention, liquid purification using electric discharge is appropriately combined with liquid purification using application of ultrasonic waves in the presence of hydrogen peroxide. This can achieve higher purification capability and can suppress an increase in hydrogen peroxide in the liquid as compared to the case where the liquid is purified by using only electric discharge.

According to invention, the hydrogen peroxide concentration in the liquid that is supplied from the purifying device to the outside is kept equal to or lower than the upper limit. This facilitates the treatment for removing hydrogen peroxide. The first control section (1) and the second control section (2) control electric discharge and application of ultrasonic waves, respectively, according to the hydrogen peroxide concentration in the liquid in the storage tank (41). Accordingly, the purification treatment can be performed while controlling the hydrogen peroxide concentration in the liquid within a desired range. Electric discharge is stopped to stop production of hydrogen peroxide when the hydrogen peroxide concentration in the liquid becomes higher than the upper limit. Accordingly, the hydrogen peroxide concentration in the liquid can be kept equal to or lower than the upper limit, and removal of hydrogen peroxide from the treated liquid can be facilitated. The hydrogen peroxide concentration in the liquid can be controlled to the lower limit or higher. Accordingly, hydroxyl radicals can be efficiently generated when ultrasonic waves are applied. The hydrogen peroxide concentration in the liquid is controlled by the control section so as not to be higher than the upper limit. This can facilitate the treatment for removing hydrogen peroxide. The hydrogen peroxide concentration in the liquid can be controlled to the lower limit or higher. Accordingly, hydroxyl radicals can be efficiently generated when ultrasonic waves are applied. Electric discharge can be caused even when a pulse voltage is applied to the pair of electrodes (64, 66). Accordingly, hydroxyl radicals can be efficiently generated in the liquid, and a higher purification effect can be achieved by combination with application of ultrasonic waves. Hydroxyl radicals can be efficiently generated in the tap water. Chlorine in the tap water allows hydroxyl radicals to be efficiently produced by electric discharge.

### BRIEF DESCRIPTION OF THE DRAWINGS

[FIG. 1] FIG. 1 is a configuration diagram showing a purifying device used in the method of the present invention (First Embodiment).
[FIG. 2] FIGS. 2(A) and 2(B) are enlarged sectional views showing specific examples of an ultrasound generating section.
[FIG. 3] FIG. 3 is diagram showing a basic cycle of a liquid treatment by the purifying device according to the present invention.
[FIG. 4] FIG. 4(A) is a timing chart showing an example of operation control in the case of performing feedback control by using the concentration of hydrogen peroxide in liquid (according to the invention), and FIG. 4(B) is a timing chart showing an example of operation control in the case of performing feedforward control by using measured values of a change in concentration of hydrogen peroxide.
[FIG. 5] FIG. 5 is a configuration diagram showing a purifying device used in the method of the present invention (Second Embodiment).
[FIG. 6] FIG. 6 is a configuration diagram showing a purifying device used in the method of the present invention (Third Embodiment).
[FIG. 7] FIG. 7 is a configuration diagram showing a purifying device used in the method of the present invention (Fourth Embodiment).
[FIG. 8] FIG. 8 is a configuration diagram showing a purifying device used in the method of the present invention (Fifth Embodiment).

### DESCRIPTION OF EMBODIMENTS

The inventors of the present application conducted various studies to solve the above problem, and experimentally verified that causing electric discharge in water increased the concentration of hydrogen peroxide in the water, and that the increased concentration of hydrogen peroxide could be about 100 times that obtained by electrolysis of water depending on the conditions. This is because hydroxyl radicals and oxygen radicals generated by electric discharge eventually produced hydrogen peroxide.

On the other hand, in the case of applying ultrasonic waves to water, hydroxyl radicals are not generated directly from the water, but are generated by decomposition of hydrogen peroxide. In view of the above, the inventors of the present application arrived at the idea that combination of electric discharge and application of ultrasonic waves can effectively and continuously purify liquid by hydroxyl radicals and can control the hydrogen peroxide concentration within a fixed range.

Embodiments of the present invention will be described in detail below with reference to the accompanying drawings. The following embodiments are merely to be taken as preferred examples, and are not intended to limit applications or use of the invention.

### «First Embodiment»

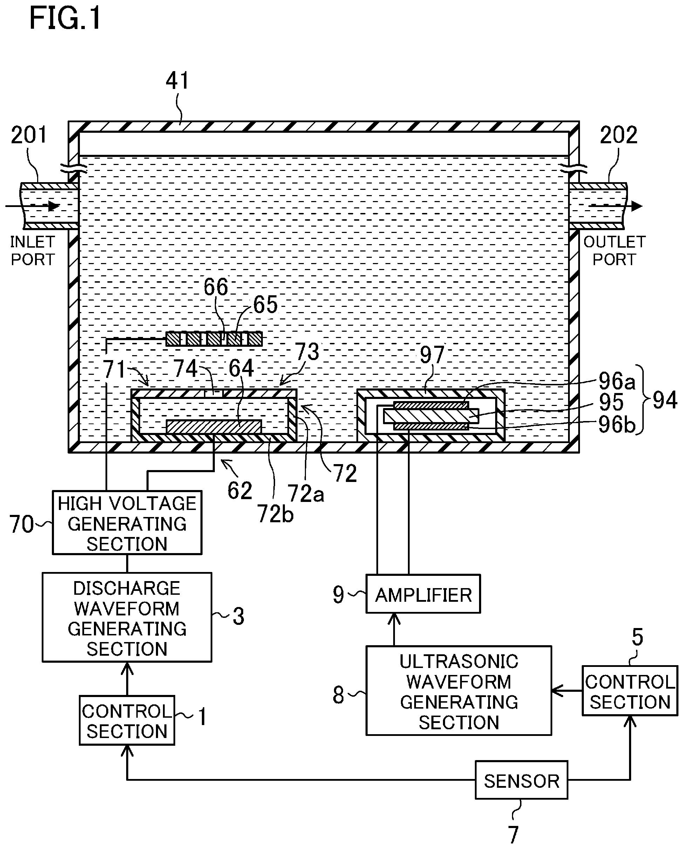

FIG. 1 is a configuration diagram showing a purifying device according to a first embodiment of the present invention.

As shown in the figure, the purifying device of the present embodiment purifies liquid by combination of electric discharge in the liquid and application of ultrasonic waves to the liquid, and includes a storage tank (41) that stores liquid such as water, a discharge unit (62), and an ultrasound generating section (94) that applies ultrasonic waves to the liquid in the storage tank (41). In particular, tap water is used as the liquid in the present embodiment. The tap water preferably contains chlorine dissolved therein.

The purifying device of the present embodiment includes a discharge waveform generating section (3) connected to a high voltage generating section (70), a first control section (1) that controls voltage application to a pair of electrodes (64, 65), an ultrasonic waveform generating section (8) that supplies an alternating current (AC) voltage of a predetermined frequency to the ultrasound generating section (94) via an amplifier (9), a second control section (5) that controls operation of the ultrasound generating section (94) via the ultrasonic waveform generating section (8), and a sensor (7) that detects the hydrogen peroxide concentration in the liquid in the storage tank (41). Although not shown in the figure, a central processing unit (CPU) may be provided which controls the first control section (1) and the second control section (5) based on the detection signal of the sensor (7). A method for controlling the discharge unit (62) and the ultrasound generating section (94) by the first control section (1) and the second control section (5) will be described later. The purifying device need not necessarily include the sensor (7) in the case of performing so-called feedforward control described below (not according to the inventive method). Liquid entering the storage tank (41) through an inlet path (201) is stored therein, and purified liquid is supplied to the outside of the device through an outlet path (202). This storage tank (41) is formed in the shape of, e.g., a hermetically sealed container.

The discharge unit (62) includes the pair of electrodes (64, 65), the high voltage generating section (70) connected to the pair of electrodes (64, 65) to apply a voltage thereto, and an insulating casing (71) accommodating the electrode A (64) therein.

The pair of electrodes (64, 65) are intended to cause electric discharge in water. The electrode A (64) is placed in the insulating casing (71). The electrode A (64) is formed in the shape of a flat plate. The electrode A (64) is connected to the high voltage generating section (70).

The electrode B (65) is placed outside the insulating casing (71). The electrode B (65) is provided above the other electrode A (64). The electrode B (65) is formed in the shape of a flat plate and is in the form of a mesh or punching metal having a plurality of through holes (66). The electrode B (65) is placed substantially parallel to the electrode A (64). The electrode B (65) is connected to the high voltage generating section (70). These electrodes (64, 65) are made of a conductive material having high corrosion resistance.

The high voltage generating section (70) may be formed by, e.g., a power supply that applies a predetermined voltage to the pair of electrodes (64, 65). Namely, the high voltage generating section (70) may not be a pulse power supply that repeatedly momentarily applies a high voltage to the pair of electrodes (64, 65), but may be a power supply that constantly applies a voltage of several kilovolts to the pair of electrodes (64, 65) or an alternating power supply that alternately applies a voltage of several kilovolts to the positive and negative electrodes of the pair of electrodes (64, 65). The high voltage generating section (70) may include a constant current control section (not shown) that controls a discharge current of the pair of electrodes (64, 65) to a constant value, and may include a constant voltage control section that controls a voltage to a constant value.

The insulating casing (71) is placed on the bottom portion of the storage tank (41). The insulating casing (71) is comprised of an insulating material such as, e.g., a ceramic material. The insulating casing (71) has a case body (72) formed in the shape of a container that is open at its one surface (upper surface), and a plate-like lid portion (73) closing the upper open part of the case body (72).

The case body (72) has a rectangular tubular peripheral wall portion (72a), and a bottom portion (72b) that closes the bottom surface of the peripheral wall portion (72a). The electrode A (64) is placed on the bottom portion (72b). In the insulating casing (71), the vertical distance between the lid portion (73) and the bottom portion (72b) is larger than the thickness of the electrode A (64). That is, a predetermined interval is secured between the electrode A (64) and the lid portion (73). Space is thus formed in the insulating casing (71) by the electrode A (64), the case body (72), and the lid portion (73).

The lid portion (73) of the insulating casing (71) has one or more openings (74) that extend through the lid portion (73) in the thickness direction thereof. This opening (74) allows an electric field to be formed between the electrode A (64) and the electrode B (65). The opening (74) in the lid portion (73) preferably has an inner diameter of 0.02 mm to 0.5 mm, both inclusive. Such an opening (74) forms a current density concentration portion that increases the current density of a current path between the pair of electrodes (64, 65).

As described above, the insulating casing (71) accommodates only one electrode (electrode A (64)) of the pair of electrodes (64, 65) therein, and forms an insulating member having the opening (74) as the current density concentration portion.

Moreover, in the opening (74) of the insulating casing (71), the current density in the current path increases, whereby the liquid is evaporated by Joule heat to form air bubbles. That is, the opening (74) of the insulating casing (71) functions as a vapor phase forming portion that forms air bubbles as a vapor phase portion in the opening (74).

In the example shown in FIG. 1, the ultrasound generating section (94) is formed by plate-like piezoelectric ceramic member (95) and a pair of metal plates (96a, 96b) provided so as to interpose the piezoelectric ceramic member (95) therebetween. A case (97) that encloses the ultrasound generating section (94) is hermetically sealed, and is placed on the bottom portion of the storage tank (41). The ultrasound generating section (94) is placed at a position closer to an outlet port (i.e., a position farther from an inlet port) of the storage tank (41) than the pair of electrodes (64, 65) are.

An output signal (AC voltage) of the ultrasonic waveform generating section (8) is supplied to the metal plates (96a, 96b) after being amplified by the amplifier (9). In response to this signal, the ultrasound generating section (94) applies ultrasonic waves of any frequency to the liquid in the storage tank (41). It is particularly preferable that the frequency of the ultrasonic waves be about 100 kHz or more in order to decompose hydrogen peroxide to efficiently produce hydroxyl radicals. It is more preferable that the frequency of the ultrasonic waves be 100 kHz or more and less than 500 kHz.

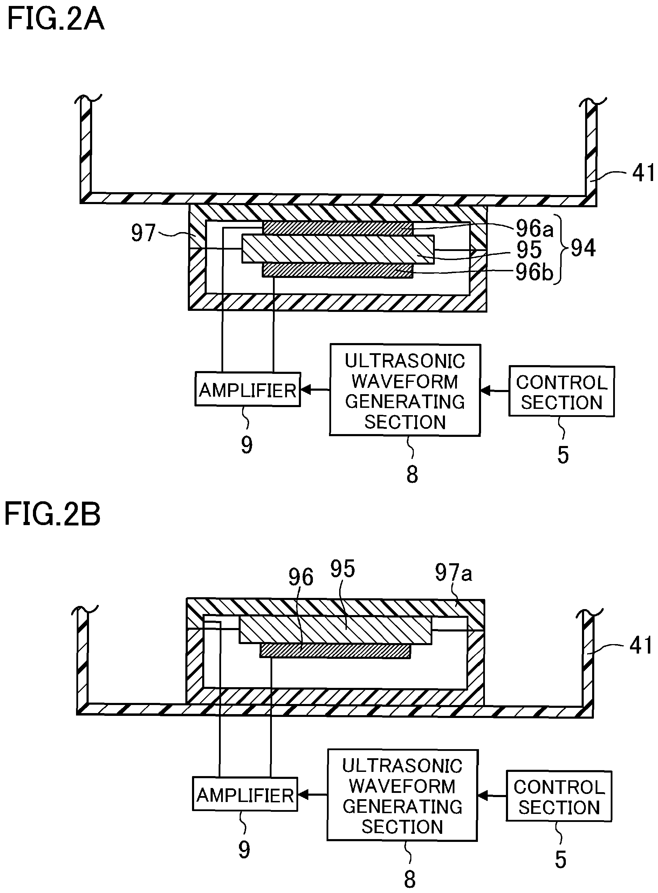

The ultrasound generating section (94) may be placed at any position as long as ultrasonic waves can be applied to the liquid in the storage tank (41). For example, as shown in FIG. 2(A), the ultrasound generating section (94) may be placed on the outer surface of the bottom portion of the storage tank (41), or may be placed at a position closer to the inlet port in the storage tank (41) than the pair of electrodes (64, 65) are. In the case where the ultrasound generating section (94) is placed on the outer surface of the bottom portion of the storage tank (41), ultrasonic waves are transmitted to the liquid via the wall surface of the storage tank (41).

The configuration of the ultrasound generating section (94) is not limited to the example shown in FIG. 1. For example, as shown in FIG. 2(B), the plate-like piezoelectric ceramic member (95) may be interposed between the upper part of a metal case (97a) and a metal plate (96) and an AC voltage may be supplied therebetween.

### Operation

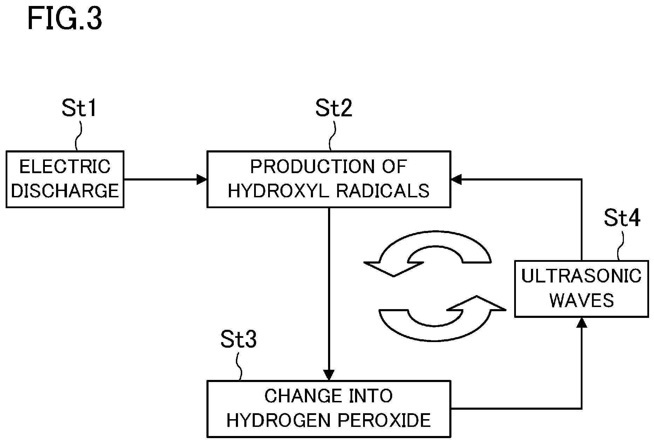

FIG. 3 is a diagram showing a basic cycle of a liquid treatment by the purifying device of the present invention. As shown in the figure, the liquid such as tap water stored in the storage tank (41) is first purified by electric discharge that is caused between the pair of electrodes (64, 65). This electric discharge produces active species such as hydroxyl radicals in the liquid, and such active species perform decomposition of an organic substance etc., sterilization, etc. (steps St1, St2 in FIG. 3). The hydroxyl radicals change into hydrogen peroxide in a short time (step St3).

Next, ultrasonic waves are propagated from the ultrasound generating section (94) to the liquid, whereby the hydrogen peroxide in the liquid is decomposed and changed into hydroxyl radicals (step St4). The hydroxyl radicals generated by the application of ultrasonic waves change back into hydrogen peroxide. However, since those hydroxyl radicals used for the liquid purification reaction such as sterilization change into water, the hydrogen peroxide concentration decreases in the case where electric discharge is stopped and only application of ultrasonic waves is performed.

This liquid purification may be performed by so-called batch processing in which all the liquid in the storage tank (41) is replaced each time. Alternatively, this liquid purification may be performed by continuous processing in which the process of supplying liquid into the storage tank (41) through the inlet path (201) and the process of discharging liquid from the storage tank (41) through the outlet path (202) are performed continuously.

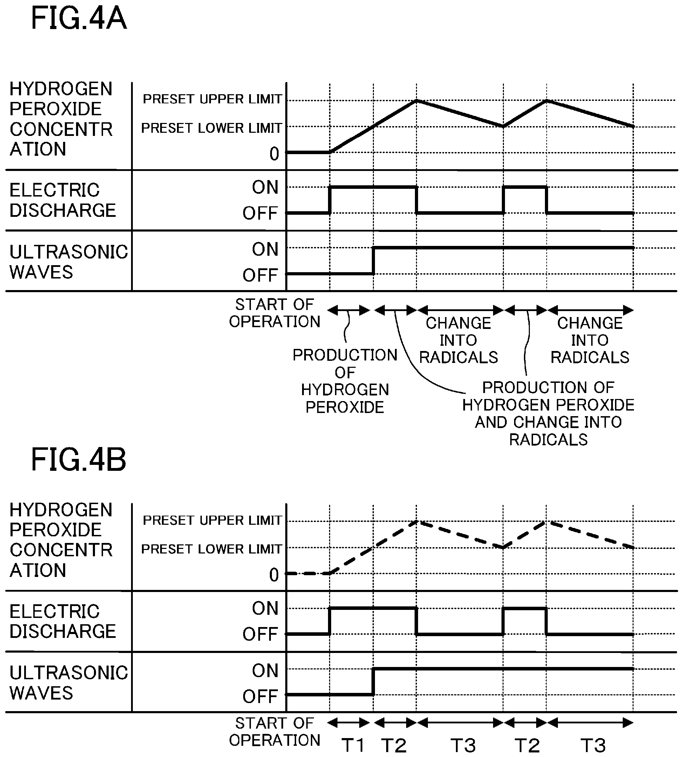

A specific example of operation control of the purifying device using the combination of electric discharge and ultrasound treatment will be described below. FIG. 4(A) is a timing chart showing an example of the operation control in the case of performing feedback control using the concentration of hydrogen peroxide in the liquid. In the following method, hydrogen peroxide in the liquid is detected by the sensor (7). In this control, a predetermined lower limit and a predetermined upper limit higher than the lower limit are set in advance for the hydrogen peroxide concentration in the liquid.

In this method, operation is first started with the liquid being stored in the storage tank (41). The control section (1) applies a predetermined voltage between the pair of electrodes (64, 65) to cause electric discharge. At this time, the ultrasound generating section (94) is in a stopped state. The liquid is thus purified, and the hydrogen peroxide concentration in the liquid increases.

Then, if the hydrogen peroxide concentration in the liquid becomes higher than the preset lower limit, the first control section (1) continues to apply the voltage to the pair of electrodes (64, 65), and the second control section (5) drives the ultrasound generating section (94) to apply ultrasonic waves to the liquid. The liquid is thus purified by hydroxyl radicals produced by the electric discharge and hydroxyl radicals produced from hydrogen peroxide. Since the amount of hydrogen peroxide that is produced by the electric discharge is larger than that of hydrogen peroxide that is discomposed by the ultrasonic waves, the hydrogen peroxide concentration in the liquid increases during this period as well.

If the hydrogen peroxide concentration in the liquid becomes higher than the preset upper limit, the first control section (1) stops voltage application to the pair of electrodes (64, 65) to stop electric discharge. The second control section (5) continues to drive the ultrasound generating section (94) to apply ultrasonic waves to the liquid. The liquid is thus purified by the hydroxyl radicals produced from hydrogen peroxide. The hydrogen peroxide concentration in the liquid decreases during this period because hydrogen peroxide is decomposed by the ultrasonic waves.

Subsequently, when the hydrogen peroxide concentration in the liquid becomes smaller than the lower limit, the first control section (1) resumes voltage application to the pair of electrodes (64, 65). This increases the hydrogen peroxide concentration in the liquid again. Thereafter, a period in which only application of ultrasonic waves is performed and a period in which application of ultrasonic waves and electric discharge are combined are similarly repeated to purify the liquid while controlling the hydrogen peroxide concentration in the liquid within the range of the lower limit to the upper limit, both inclusive.

### Advantages of First Embodiment

In the above method, the first control section (1) causes electric discharge to produce hydroxyl radicals until the hydrogen peroxide concentration in the liquid reaches the upper limit after the start of operation, whereby the liquid can be purified. The second control section (5) drives the ultrasound generating section (94) during the period in which the hydrogen peroxide concentration in the liquid is higher than the predetermined lower limit. In other words, the second control section (5) stops the ultrasound generating section (94) during the period in which the hydrogen peroxide concentration is lower than the predetermined lower limit. That is, since hydroxyl radicals are produced by the ultrasonic waves when a sufficient amount of hydrogen peroxide is present in the liquid, the liquid can be effectively purified. Moreover, since ultrasonic waves are continuously applied in the presence of a sufficient concentration of hydrogen peroxide, hydroxyl radicals can be continuously produced. Accordingly, high purification capability can be maintained for a predetermined period.

Moreover, according to the above method, the hydrogen peroxide concentration in the liquid that is supplied from the storage tank (41) to the outlet path (202) can be kept at the upper limit or less. This can facilitate the treatment for removing hydrogen peroxide.

According to the purifying device of the present embodiment, as described above, the combination of electric discharge in the liquid and application of ultrasonic waves to the liquid can improve purification capability without increasing the hydrogen peroxide concentration in the liquid.

In the case of continuously treating the liquid, placing the ultrasound generating section (94) closer to the outlet port than the pair of electrodes (64, 65) is as shown in FIG. 1 allows hydroxyl radicals to be effectively generated by application of ultrasonic waves from hydrogen peroxide produced by electric discharge.

According to the present embodiment, hydroxyl radicals can be efficiently produced in tap water.

According to the present embodiment, chlorine in tap water allows hydroxyl radicals to be efficiently produced by electric discharge.

The first control section (1) that controls voltage application to the pair of electrodes (64, 65) and the second control section (5) that controls operation of the ultrasound generating section (94) are provided separately in FIG. 1. However, voltage application to the pair of electrodes (64, 65) and operation of the ultrasound generating section (94) may be controlled by one control section.

In the purifying device of the present embodiment, bacteria etc. that grows in the storage tank (41) can be effectively destroyed simultaneously with the liquid purification treatment by hydroxyl radicals that are produced by electric discharge and application of ultrasonic waves.

### <Modification of First Embodiment>

A modification of the operation of the purifying device of the present embodiment will be described below (not part of the inventive method). FIG. 4(B) is a timing chart showing an example of the operation control in the case of performing feedforward control by using measured values of a change in concentration of hydrogen peroxide.

The purifying device used in this example need not necessarily have the sensor (7). However, time T1 it takes for the hydrogen peroxide concentration in the liquid in the storage tank (41) to change from 0 to the lower limit in the case of using only electric discharge, time T2 it takes for the hydrogen peroxide concentration in the liquid to change from the lower limit to the upper limit in the case of using electric discharge and application of ultrasonic waves simultaneously, and time T3 it takes for the hydrogen peroxide concentration in the liquid to change from the upper limit to the lower limit in the case of using only application of ultrasonic waves are measured in advance, and the measurement data is stored in a memory (not shown) that is provided inside or outside the first control section (1) and the second control section (5). The first control section (1) and the second control section (5) perform the following control based on the measurement data. A timer that measures time is provided inside or outside the first control section (1) and the second control section (5).

In the method of this modification, the first control section (1) first applies a predetermined voltage between the pair of electrodes (64, 65) to cause electric discharge. At this time, the ultrasound generating section (94) is in a stopped state. The liquid is thus purified, and the hydrogen peroxide concentration in the liquid increases.

Next, after the elapse of the time T1 after the start of operation, the first control section (1) continues to apply the voltage to the pair of electrodes (64, 65), and the second control section (5) drives the ultrasound generating section (94) to apply ultrasonic waves to the liquid. The liquid is thus purified by hydroxyl radicals produced by electric discharge and hydroxyl radicals produced from hydrogen peroxide. The hydrogen peroxide concentration in the liquid increases during this period as well.

Then, after the elapse of the time T2, the first control section (1) stops voltage application to the pair of electrodes (64, 65) to stop electric discharge. The second control section (5) continues to drive the ultrasound generating section (94) to apply ultrasonic waves to the liquid. The liquid is thus purified by hydroxyl radicals produced from hydrogen peroxide. The hydrogen peroxide concentration in the liquid decreases during this period.

Thereafter, after the elapse of the time T3, the first control section (1) resumes voltage application to the pair of electrodes (64, 65), and maintains this state for the time T2. The hydrogen peroxide concentration in the liquid thus increases again. Subsequently, the period in which only application of ultrasonic waves is performed (time T3) and the period in which application of ultrasonic waves and electric discharge are combined (time T2) are repeated to purify the liquid while controlling the hydrogen peroxide concentration in the liquid within the range of the lower limit and the upper limit, both inclusive.

According to the above method as well, the liquid can be purified while controlling the hydrogen peroxide concentration in the liquid within the range of the lower limit and the upper limit, both inclusive. This is merely a modification of the operation, and the liquid can be purified by other methods.

### <<Second Embodiment>>

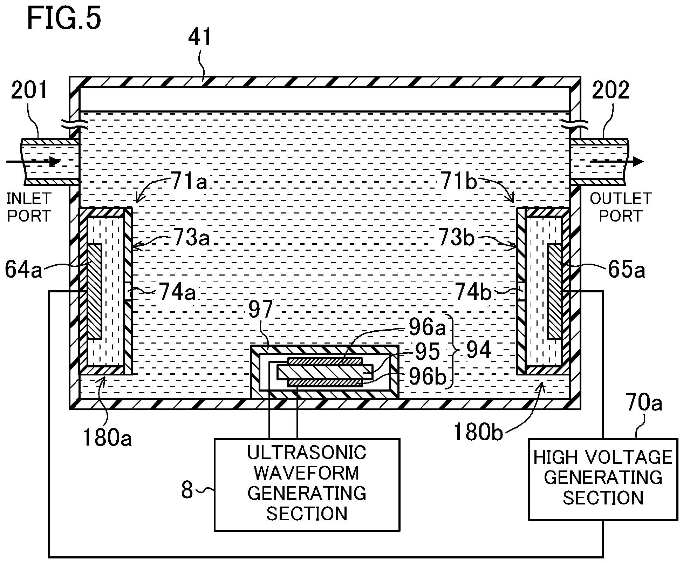

FIG. 5 is a configuration diagram showing a purifying device according to a second embodiment. In the figure, configurations similar to those of the purifying device of the first embodiment are denoted by the same characters as those of FIG. 1. Although the discharge waveform generating section (3), the first control section (1), the second control section (5), the amplifier (9), and the sensor (7) are not shown in FIG. 5, the purifying device of present embodiment actually includes these components. Differences from the purifying device of the first embodiment will be mainly described below.

The purifying device of the present embodiment includes a storage tank (41), a pair of electrodes (64a, 65a) placed in the storage tank (41), a high voltage generating section (power supply section) (70a) connected to the pair of electrodes (64a, 65a), and an ultrasound generating section (94) placed on the bottom portion of the storage tank (41).

The electrode (64a) is accommodated in an insulating casing (71a), and the electrode (65a) is accommodated in an insulating casing (71b). The electrode (64a) and the electrode (65a) are formed in the shape of a flat plate. The electrode (64a) and the electrode (65a) are comprised of a conductive metal material with high corrosion resistance. The high voltage generating section (70a) supplies a voltage of about several kilovolts to the pair of electrodes (64a, 65a).

The insulating casings (71a, 71b) are comprised of an insulating material such as, e.g., a ceramic material, and have a configuration similar to that of the insulating casing (71) shown in FIG. 1.

That is, the insulating casing (71a) has a case body (180a) in the shape of a container that is open at its one surface (the surface on the right side in FIG. 5), and a plate-like lid portion (73a) closing the open part of the case body (180a). The insulating casing (71b) has a case body (180b) in the shape of a container that is open at its one surface (the surface on the left side in FIG. 5), and a plate-like lid portion (73b) closing the open part of the case body (180b).

The lid portion (73a) of the insulating casing (71a) has a single opening (74a) that extends through the lid portion (73a) in the thickness direction thereof. The lid portion (73b) of the insulating casing (71b) also has a single opening (74b) that extends through the lid portion (73b) in the thickness direction thereof. These openings (74a, 74b) allow an electric field to be formed between the electrode (64a) and the electrode (65a). The openings (74a, 74b) preferably have an inner diameter of 0.02 mm to 0.5 mm, both inclusive. Such openings (74a, 74b) form a current density concentration portion that increases the current density in a current path between the pair of electrodes (64a, 65a).

The insulating casings (71a, 71b) are placed on the opposing inner side surfaces of the storage tank (41) so that their lid portions (73a, 73b) face each other. In other words, the electrode (64a) and the electrode (65a) are arranged so as to face each other.

In the openings (74a, 74b) of the insulating casings (71a, 71b), the current density in the current path increases, whereby the liquid is evaporated by Joule heat to form air bubbles. That is, the openings (74a, 74b) of the insulating casings (71a, 71b) function as a vapor phase forming portion that forms air bubbles as a vapor phase portion in the openings (74a, 74b). With this configuration, electric discharge can be caused in the air bubbles between the pair of electrodes (64a, 65a) when a voltage is supplied to the pair of electrodes (64a, 65a).

A specific configuration of the ultrasound generating section (94) is similar to the purifying device according to the first embodiment.

By operating the purifying device of the present embodiment by the methods shown in FIGS. 4A and 4B, the liquid in the storage tank (41) can be effectively purified while keeping the hydrogen peroxide concentration in the liquid within the predetermined range.

### <<Third Embodiment>>

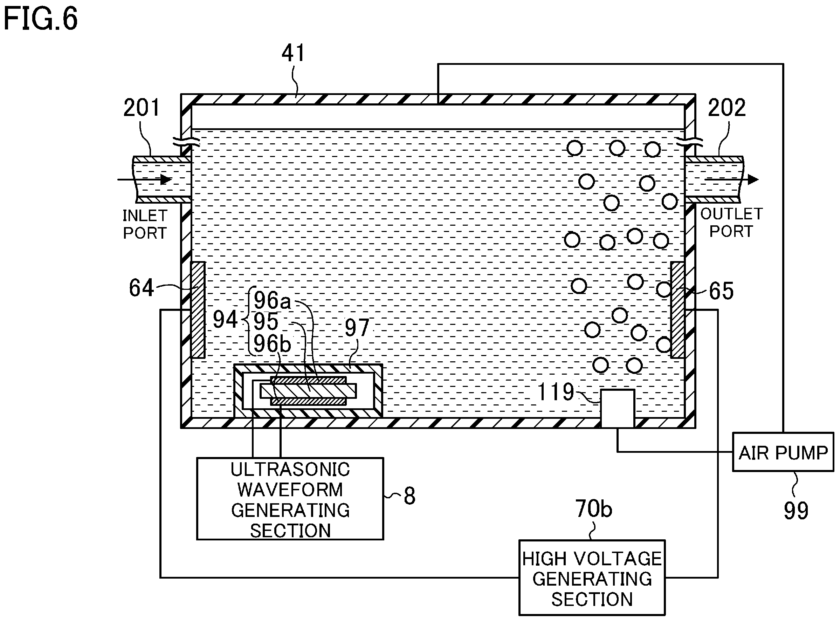

FIG. 6 is a configuration diagram showing a purifying device according to a third embodiment. In the figure, configurations similar to those of the purifying device according to the first embodiment are denoted by the same reference characters as those of FIG. 1. Although the discharge waveform generating section (3), the first control section (1), the second control section (5), the amplifier (9), and the sensor (7) are not shown in FIG. 6, the purifying device of the present embodiment actually includes these components. Differences from the purifying device of the first embodiment will be mainly described below.

The purifying device of the present embodiment includes a storage tank (41), a pair of electrodes (64, 65) placed in the storage tank (41), a high voltage generating section (power supply section) (70b) connected to the pair of electrodes (64, 65), and an ultrasound generating section (94) placed on the bottom portion of the storage tank (41). The high voltage generating section (70b) forms a power supply section.

In the purifying device of the present embodiment, the electrode A (64) and the electrode B (65) are connected to the positive and negative sides of the high voltage generating section (70b), respectively, and a high pulse voltage is supplied from the high voltage generating section (70b) to the pair of electrodes (64, 65).

The purifying device of the present invention does not have the insulating casing (71) surrounding the electrode A (64). Both the electrode A (64) and the electrode B (65) are formed in the shape of a plate, and are placed on the inner side surfaces of the storage tank (41) so as to face each other.

The purifying device further includes a nozzle (119) that is provided at least between the pair of electrodes (64, 64) at a position lower than the pair of electrodes (64, 65) and near the electrode B (65), such as, e.g., on the bottom portion of the storage tank (41), and an air pump (99) that supplies a gas such as air into the nozzle (119). The gas in the storage tank (41) is circulated by the air pump (99) via the nozzle (119). The air pump (99) may supply a gas from the outside into the storage tank (41). The nozzle (119) forms a discharge portion, and the air pump (99) forms a supply portion. The nozzle (119) may be provided near the electrode A (64).

The configuration of the ultrasound generating section (94) is similar to the purifying device according to the first embodiment, and the ultrasound generating section (94) may be placed on the bottom portion of the storage tank (41). However, the ultrasound generating section (94) may be placed at any position as long as ultrasonic waves can be applied to the liquid in the storage tank (41).

Bubbles are discharged from the nozzle (119) into the liquid at least during a period in which an electric discharge treatment is performed. Since a pulse voltage is supplied to the pair of electrodes (64, 65) in the presence of the bubbles in the liquid, electric discharge occurs in the bubbles to produce hydroxyl radicals.

The purifying device of the present embodiment purifies the liquid by the combination of electric discharge and application of ultrasonic waves by using basically the same method as that of the purifying device of the first embodiment, namely the methods shown in FIGS. 4A and 4B. However, during the period of the electric discharge treatment shown in FIGS. 4A and 4B, a pulse voltage is intermittently supplied from the high voltage generating section (70b) to the pair of electrodes (64, 65), and electric discharge occurs intermittently between the pair of electrodes (64, 65).

According to the above configuration and method, hydroxyl radicals can be efficiently produced even if pulse discharge is caused between the pair of electrodes (64, 65). Accordingly, the combination of this pulse discharge and application of ultrasonic waves can achieve high purification capability without increasing the hydrogen peroxide concentration.

### <<Fourth Embodiment>>

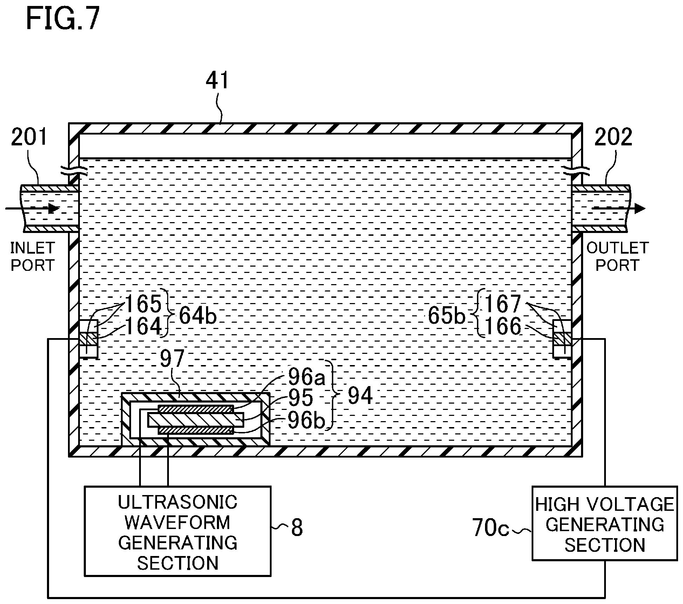

FIG. 7 is a configuration diagram showing a purifying device according to a fourth embodiment. In the figure, configurations similar to those of the purifying devices of the first and second embodiments are denoted by the same reference characters as those of FIGS. 1 and 5. Although the discharge waveform generating section (3), the first control section (1), the second control section (5), the amplifier (9), and the sensor (7) are not shown in FIG. 7, the purifying device of the present embodiment actually include these components. Differences from those of the purifying device of the second embodiment will be mainly described below.

The purifying device of the present embodiment includes a storage tank (41), a pair of electrodes (64b, 65b) placed in the storage tank (41), a high voltage generating section (power supply section) (70c) connected to the pair of electrodes (64b, 65b), and an ultrasound generating section (94) placed on the bottom portion of the storage tank (41).

The electrode (64b) and the electrode (65b) are placed on the inner side surfaces of the storage tank (41) so as to face each other.

The electrode (64b) has at least one conductive portion (164) and an insulating portion (165) surrounding the conductive portion (164).

The electrode (65b) has at least one conductive portion (166) and an insulating portion (167) surrounding the conductive portion (166).

As described above, the exposed surface of the conductive portion (164) in the electrode (64b) and the exposed surface of the conductive portion (166) in the electrode (65b) have a small area. Accordingly, a current density concentration portion is formed on the surfaces of the conductive portions (164, 166) if a voltage is supplied to the pair of electrodes (64b, 65b). The liquid is therefore evaporated by Joule heat on the surfaces of the conductive portions (164,166), forming air bubbles. If the voltage continues to be supplied from the high voltage generating section (70c) with the exposed surfaces of the conductive portions (164, 166) being covered by the bubbles, electric discharge occurs in the bubbles.

A specific configuration of the ultrasound generating section (94) is similar to the purifying devices of the first and second embodiments.

By operating the purifying device of the present embodiment by the methods shown in FIGS. 4(A) and 4(B), the liquid in the storage tank (41) can be effectively purified while keeping the hydrogen peroxide concentration in the liquid within the predetermined range.

With the above configuration as well, the combination of electric discharge between the pair of electrodes (64b, 65b) and application of ultrasonic waves can achieve high purification capability without increasing the hydrogen peroxide concentration.

### <<Fifth Embodiment>>

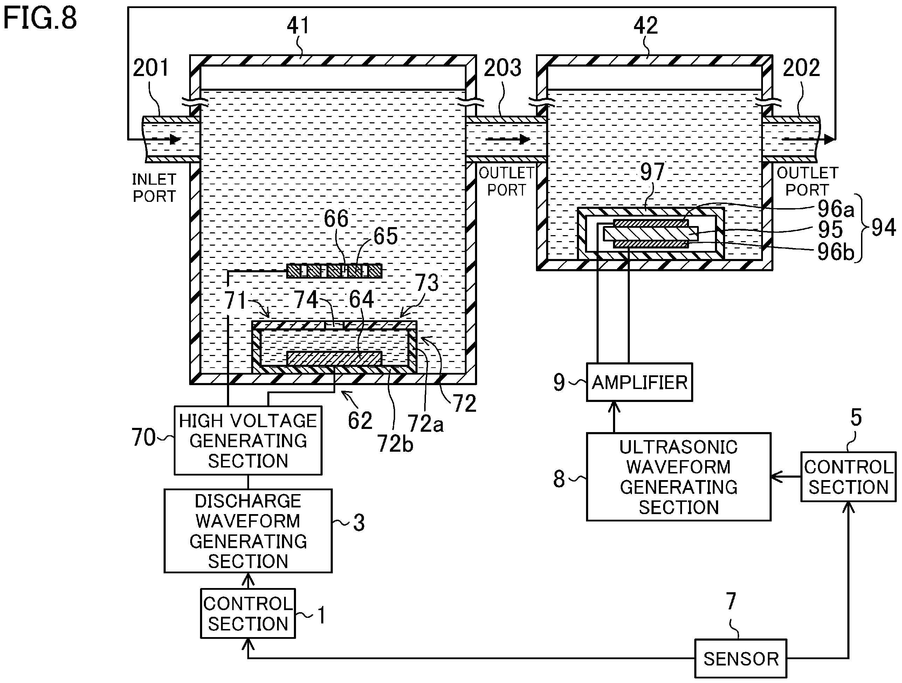

Although the discharge unit (62) and the ultrasound generating section (94) are provided in the single storage tank (41) in the first embodiment, a first storage tank (41) and a second storage tank (42) are provided in the present embodiment, as shown in FIG. 8.

That is, a discharge unit (62) is provided in the first storage tank (41), and an ultrasound generating section (94) is provided in the second storage tank (42). The discharge unit (62) and the ultrasound generating section (94) are configured similarly to those of the first embodiment.

The first storage tank (41) and the second storage tank (42) are connected by a connection passage (203). An inlet path (201) is connected to the first storage tank (41), and an outlet path (202) is connected to the second storage tank (42). The inlet path (201) and the outlet path (202) are connected so that liquid flowing out of the second storage tank (42) returns to the first storage tank (41) and the liquid circulates between the first storage tank (41) and the second storage tank (42).

Accordingly, the liquid such as tap water stored in the first storage tank (41) is purified by electric discharge of the discharge unit (62). In the second storage tank (42), hydrogen peroxide in the liquid is decomposed into hydroxyl radicals by ultrasonic waves of the ultrasound generating section (94). Other configurations, functions, and advantages are similar to those of the first embodiment.

In each of the above embodiments, the shape, position, material, etc. of each member or the method of operating the purifying device can be modified as appropriate

### INDUSTRIAL APPLICABILITY

As described above, the present invention is useful as devices that purify various kinds of liquid by combining electric discharge and application of ultrasonic waves.

### DESCRIPTION OF REFERENCE CHARACTERS

- 1, 5: Control Section
- 3: Discharge Waveform Generating Section
- 7: Sensor
- 8: Ultrasonic Waveform Generating Section
- 9: Amplifier
- 41: Storage Tank
- 62: Discharge Unit
- 64: Electrode A
- 64a, 64b: Electrode
- 65: Electrode B
- 65a, 65b: Electrode
- 66: Through Hole
- 70: Power Supply Section
- 70a, 70b, 70c: High Voltage Generating Section
- 71, 71a, 71b: Insulating Casing
- 72: Case Body
- 72a: Peripheral Wall Portion
- 72b: Bottom Portion
- 73, 73a, 73b: Lid Portion
- 74, 74a, 74b: Opening
- 94: Ultrasound Generating Section
- 95: Piezoelectric Ceramic Member
- 96, 96a, 96b: Metal Plate
- 97: Case
- 97a: Metal Casing
- 99: Air Pump
- 119: Nozzle
- 164, 166: Conductive Portion
- 165, 167: Insulating Portion
- 180a, 180b: Case Body
- 201: Inlet Path
- 202: Outlet Path

## Claims

1. A method of operating a purifying device comprising a storage tank (41) storing liquid, a power supply (70, 70a, 70b, 70c), a pair of electrodes (64, 64a, 64b, 65, 65a, 65b) connected to the power supply (70, 70a, 70b, 70c), and an ultrasound generating section (94), a first control section (1) controlling voltage application to the pair of electrodes (64, 64a, 64b, 65, 65a, 65b); a second control section (5) controlling operation of the ultrasound generating section (94), a sensor (7) detecting the hydrogen peroxide concentration in the liquid in the storage tank (41), wherein the first control section (1) controls the voltage application to the pair of electrodes (64, 64a, 64b, 65, 65a, 65b) based on a detection signal of the sensor (7), and the second control section (5) controls the operation of the ultrasound generating section (94) based on the detection signal of the sensor (7), the method comprising:
causing electric discharge in the liquid in the storage tank (41) to produce hydroxyl radicals in the liquid in the storage tank (41); and
applying ultrasonic waves to the liquid in the storage tank (41) to convert hydrogen peroxide in the liquid, which is produced from the produced hydroxyl radicals, into hydroxyl radicals,
**characterized by**
controlling a concentration of the hydrogen peroxide in the liquid in the storage tank (41) to be within a fixed range,
wherein at least when the hydrogen peroxide concentration in the liquid becomes higher than the upper limit, the first control section (1) stops the voltage application to the pair of electrodes (64, 64a, 64b, 65, 65a, 65b) to stop the electric discharge, and the second control section (5) drives the ultrasound generating section (94), and
wherein the second control section (5) drives the ultrasound generating section (94) during a period in which the hydrogen peroxide concentration in the liquid in the storage tank (41) is higher than a predetermined lower limit.

2. The method of claim 1, further comprising:
a discharge portion (119) discharging bubbles into the liquid in the storage tank (41), and
a supply portion (99) supplying a gas into the discharge portion (119), wherein
the pair of electrodes (64, 65) are formed in a shape of a plate and are arranged so as to face each other,
the power supply (70b) applies a pulse voltage to the pair of electrodes (64, 65), and
the discharge portion (119) is placed on a bottom portion of the storage tank (41) between the pair of electrodes (64, 65).

3. The method of claim 1 or 2, wherein
the liquid is tap water.

4. The method of claim 3, wherein
the tap water contains chlorine dissolved therein.

## Patentansprüche

1. Verfahren zum Betreiben einer Reinigungsvorrichtung, umfassend einen Flüssigkeit speichernden Speicherbehälter (41), eine Leistungsversorgung (70, 70a, 70b, 70c), ein Paar Elektroden (64, 64a, 64b, 65,65a, 65b), die mit der Leistungsversorgung (70, 70a, 70b, 70c) verbunden sind, und einen Ultraschallerzeugungsabschnitt (94), einen ersten Steuerungsabschnitt (1), der das Anlegen von Spannung an das Paar Elektroden (64,64a, 64b, 65,65a, 65b) steuert; einen zweiten Steuerungsabschnitt (5), der den Betrieb des Ultraschallerzeugungsabschnitts (94) steuert, einen Sensor (7), der die Wasserstoffperoxidkonzentration in der Flüssigkeit in dem Speicherbehälter (41) erfasst, wobei der erste Steuerungsabschnitt (1) das Anlegen der Spannung an das Paar Elektroden (64, 64a, 64b, 65,65a, 65b) basierend auf einem Erfassungssignal des Sensors (7) steuert und der zweite Steuerungsabschnitt (5) den Betrieb des Ultraschallerzeugungsabschnitts (94) basierend auf dem Erfassungssignal des Sensors (7) steuert, wobei das Verfahren Folgendes umfasst:
Bewirken von elektrischer Entladung in der Flüssigkeit in dem Speicherbehälter (41), um Hydroxyl-Radikale in der Flüssigkeit in dem Speicherbehälter (41) zu erzeugen; und
Anlegen von Ultraschallwellen an die Flüssigkeit in dem Speicherbehälter (41), um Wasserstoffperoxid in der Flüssigkeit, das aus den erzeugten Hydroxyl-Radikalen erzeugt wird, in Hydroxyl-Radikale umzuwandeln,
**gekennzeichnet durch**
Steuern einer Konzentration des Wasserstoffperoxids in der Flüssigkeit in dem Speicherbehälter (41), um in einem festen Bereich zu liegen,
wobei, mindestens, wenn die Wasserstoffperoxidkonzentration der Flüssigkeit höher als der obere Grenzwert wird, der erste Steuerungsabschnitt (1) das Anlegen der Spannung an das Paar Elektroden (64, 64a, 64b, 65, 65a, 65b) unterbricht, um die elektrische Entladung zu unterbrechen, und der zweite Steuerungsabschnitt (5) den Ultraschallerzeugungsabschnitt (94) ansteuert, und
wobei der zweite Steuerungsabschnitt (5) den Ultraschallerzeugungsabschnitt (94) während einer Periode ansteuert, in der die Wasserstoffperoxidkonzentration in der Flüssigkeit in dem Speicherbehälter (41) höher als ein vorausbestimmter unterer Grenzwert ist.

2. Verfahren nach Anspruch 1, das weiter Folgendes umfasst:
einen Abgabeabschnitt (119), der Blasen in die Flüssigkeit in dem Speicherbehälter (41) abgibt, und
einen Zufuhrabschnitt (99), der ein Gas in den Abgabeabschnitt (119) zuführt, wobei
das Paar Elektroden (64, 65) in Form einer Platte ausgebildet sind und derart angeordnet sind, dass sie einander gegenüberliegen,
die Leistungsversorgung (70b) eine Impulsspannung an das Paar Elektroden (64, 65) anlegt, und
der Abgabeabschnitt (119) auf einem unteren Abschnitt des Speicherbehälters (41) zwischen dem Paar Elektroden (64, 65) platziert ist.

3. Verfahren nach Anspruch 1 oder 2, wobei
es sich bei der Flüssigkeit um Leitungswasser handelt.

4. Verfahren nach Anspruch 3, wobei:
das Leitungswasser darin gelöstes Chlor enthält.

## Revendications

1. Procédé d'utilisation d'un dispositif de purification comportant un réservoir de stockage (41) dans lequel du liquide est emmagasiné, une alimentation électrique (70, 70a, 70b, 70c), deux électrodes (64, 64a, 64b, 65, 65a, 65b) connectées à l'alimentation électrique (70, 70a, 70b, 70c), et une section de production d'ultrasons (94), une première section de commande (1) qui contrôle l'application de la tension aux deux électrodes (64, 64a, 64b, 65, 65a, 65b); une deuxième section de commande (5) qui contrôle l'utilisation de la section de production des ultrasons (94), un capteur (7) qui détecte la concentration d'eau oxygénée dans le liquide qui se trouve à l'intérieur du réservoir de stockage (41), **caractérisé en ce que** la première section de commande (1) contrôle l'application de la tension aux deux électrodes (64, 64a, 64b, 65, 65a, 65b) sur la base d'un signal de détection du capteur (7), et **en ce que** la deuxième section de commande (5) contrôle l'utilisation de la section de production des ultrasons (94) sur la base du signal de détection du capteur (7), le procédé consistant:
à provoquer une décharge électrique dans le liquide qui se trouve à l'intérieur du réservoir de stockage (41) en vue de produire des radicaux hydroxyles dans le liquide qui se trouve à l'intérieur du réservoir de stockage (41); et
à appliquer des ondes aux ultrasons au liquide qui se trouve à l'intérieur du réservoir de stockage (41) en vue de convertir l'eau oxygénée dans le liquide, qui est produite à partir des radicaux hydroxyles, en radicaux hydroxyles,
**caractérisé en ce que**
le contrôle de la concentration d'eau oxygénée dans le liquide qui se trouve à l'intérieur du réservoir de stockage (41) doit se faire dans des limites fixes,
**caractérisé en ce que** du moins lorsque la concentration d'eau oxygénée dans le liquide dépasse la limite supérieure, la première section de commande (1) met fin à l'application de la tension aux deux électrodes (64, 64a, 64b, 65, 65a, 65b) pour arrêter la décharge électrique, et la deuxième section de commande (5) contrôle l'utilisation de la section de production des ultrasons (94), et
**caractérisé en ce que** la deuxième section de commande (5) contrôle l'utilisation de la section de production des ultrasons (94) pendant une période où la concentration d'eau oxygénée dans le liquide qui se trouve à l'intérieur du réservoir de stockage (41) dépasse une limite inférieure prédéterminée.

2. Procédé selon la revendication 1, comportant par ailleurs:
une partie décharge (119) qui décharge des bulles dans le liquide qui se trouve à l'intérieur du réservoir de stockage (41), et
une partie alimentation (99) qui alimente du gaz dans la partie décharge (119), **caractérisée en ce que**
les deux électrodes (64, 65) ont la forme d'un plateau et sont disposées de manière à se faire face l'une par rapport à l'autre,
l'alimentation électrique (70b) applique une tension pulsée aux deux électrodes (64, 65), et
la partie décharge (119) est placée au fond du réservoir de stockage (41) entre les deux électrodes (64, 65).

3. Procédé selon la revendication 1 ou 2, **caractérisé en ce que** le liquide est de l'eau du robinet.

4. Procédé selon la revendication 3, **caractérisé en ce que** l'eau du robinet contient du chlore qui y est dissous.
